# EUROPÄISCHE PATENTSCHRIFT

(11) **EP 0 678 411 B1**
(45) Veröffentlichungstag und Bekanntmachung des Hinweises auf die Patenterteilung: **27.05.1998**
(21) Anmeldenummer: 95103547.6
(22) Anmeldetag: 11.03.1995
(51) Int. Cl.: B60J 7/14

(54) **Einklappbares Fahrzeugdach**
Foldable vehicle roof
Toit pliant pour véhicule

(30) Priorität: 21.04.1994 DE 4413921
(43) Veröffentlichungstag der Anmeldung: 25.10.1995
(73) Patentinhaber: Bayerische Motoren Werke Aktiengesellschaft, 80788 München (DE)
(72) Erfinder: Siring, Harald, D-81377 München (DE); Bambach, Manfred, Dr., D-80939 München (DE)

(56) Entgegenhaltungen:
- US-A- 2 762 648
- US-A- 2 860 004

## Beschreibung

Die Erfindung betrifft ein einklappbares Fahrzeugdach, mit den im Oberbegriff des Patentanspruches 1 angegebenen Merkmalen.

Ein derartiges Fahrzeugdach ist durch die US-A-2,860,004 bekannt, bei dem die Heckscheibe fest in einer Hecköffnung des rückverlagerbaren Dachteiles angeordnet ist. In der Offenstellung sind das Dachteil und die Heckscheibe in ein hinter den Fondsitzen befindliches Aufnahmefach eingebracht, das dann keine Gepäckstücke aufnehmen kann. Bei geöffnetem Fahrzeugdach und nicht besetzten Rücksitzen können auf den Sitzteilen der Rücksitze Gepäckstücke oder Gegenstände abgelegt werden, die jedoch vor einer Verlagerung in oder aus dem oben geöffneten Fahrzeug nicht gesichert sind.

Die US-A-2,762,648 weist ein feststehendes Dachteil auf, bei dem die Heckscheibe hinter die Rückenlehnen der Fondsitze einschwenkbar ist. Der verwendete Verstellmechanismus ist aufwendig, der außerdem beim Einschwenken der Heckscheibe die hinteren Rückenlehnen kurzzeitig aus dem Verstellbereich der Heckscheibe nach vorne verstellt, damit sich die Heckscheibe einschwenken läßt. Die Heckscheibe kann lediglich eine solche Längenerstreckung aufweisen, daß sich die nach vorne verstellten Rückenlehnen der Fondsitze bei herabgeschwenkter Heckscheibe in ihre Gebrauchslage zurückschwenken lassen.

Der Erfindung liegt die Aufgabe zugrunde, ein einklappbares Fahrzeugdach nach dem Oberbegriff des Patentanspruchs 1 anzugeben, das bei eingeklapptem Fahrzeugdach die Nutzung eines hinteren Kofferraumes ermöglicht. Darüber hinaus soll das Fahrzeugdach einen einfachen Aufbau mit wenigen verstellbaren Teilen aufweisen.

Diese Aufgabe ist durch die im Patentanspruch 1 angegebenen Merkmale gelöst.

Das Fahrzeugdach und die Heckscheibe sind separat in eine Öffnungslage einzuschwenken, in der sich das Fahrzeugdach bzw. die Heckscheibe über dem Sitzteil des Fondsitzes befindet. Bei geöffnetem Fahrzeugdach können in den üblicherweise im Heckbereich des Fahrzeugs vorgesehenen Gepäckraum Gegenstände eingebracht werden, die bei von einem Deckel verschlossenen Gepäckraum geschützt mitzuführen sind. Ist das Fahrzeugdach bzw. die Heckscheibe geöffnet, können zwar auf den Fondsitzen keine Personen mitfahren, dies ist jedoch in den Fällen nicht einschränkend, in denen eine Mitfahrt von Personen auf den Fondsitzen nicht beabsichtigt ist. Werden die Fondsitze benötigt, ist lediglich das Fahrzeugdach und die Heckscheibe geschlossen zu halten.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen
- Figur 1: eine Innenansicht auf die Rückenlehne eines Fondsitzes in einem Kraftfahrzeug,
- Figur 2: eine Figur 2 entsprechende Ansicht bei abgeklappter Heckscheibe,

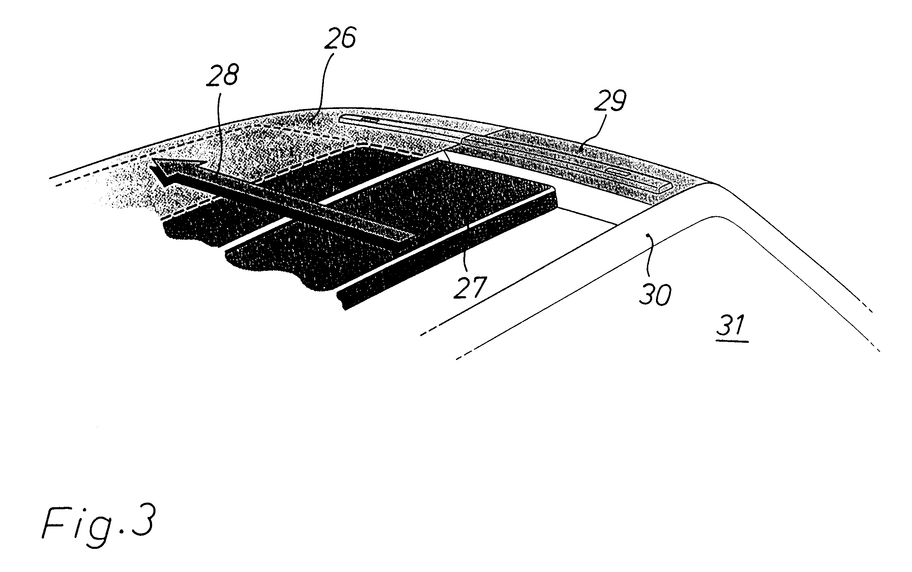

- Figur 3: eine Ansicht auf ein teilweise in eine Aufnahmeöffnung in einem hinteren Dachteil eingefahrenes Schiebedach,
- Figur 4: eine vor dem Einklappen des Fahrzeugdaches über das hintere Dachteil geschwenkte Strebe,
- Figur 5: das vollständig eingeklappte Fahrzeugdach und
- Figur 6: einen vertikalen Fahrzeuglängsschnitt durch die Abdichtung der Heckscheibe gegenüber dem Dachteil.

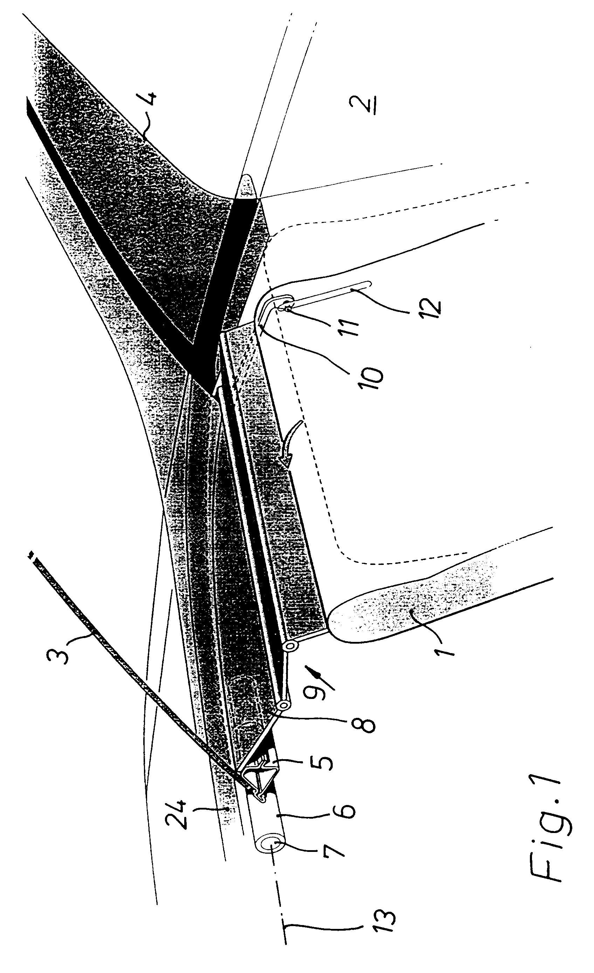

Das in Figur 1 mit Blick auf die Rückenlehne 1 eines Fondsitzes dargestellte Fahrzeug 2 weist ein einklappbares Fahrzeugdach auf, bei dem die Heckscheibe 3 und ein mit hinteren seitlichen C-Säulen 4 verbundenes, nicht dargestelltes Dachteil unabhängig voneinander in eine das Fahrzeugdach freigebende Aufbewahrungsstellung über ein Sitzteil einschwenkbar sind, das zusammen mit der Rückenlehne 1 einen Fondsitz bildet. Die Heckscheibe 3 ist allseitig von einem Heckscheibenrahmen 5 umgeben, der an seinem den unteren Rand der Heckscheibe 3 untergreifenden Querteil mit einem in Querrichtung in einem Fahrzeugmittenbereich angeordneten Schwenkrohr 6 verbunden ist. Zur schwenkbaren Lagerung der Heckscheibe 3 greifen in nicht dargestellter Weise an der Fahrzeugkarosserie abgestützte Bolzen in stirnseitige Öffnungen 7 im Schwenkrohr 6 ein. Ein hinteres Teil 8 einer faltbaren Hutablage 9 ist an der Innenseite der Heckscheibe 3 mit dem unteren Querteil des Heckscheibenrahmens 5 verbunden. An beiden Seitenbereichen des unteren Querteiles des Heckscheibenrahmens 5 ist jeweils ein Führungsarm 10 befestigt, der an seinem in der dargestellten Schließstellung nach vorne gerichteten Endbereich einen seitlich nach innen gerichteten Zapfen 11 aufweist, der in eine seitliche Führung 12 in der Rückenlehne 1 eingreift. Die Führung 12 verläuft im oberen Bereich der Rückenlehne 1 etwa radial zur Schwenkachse der Rückenlehne 1. Der Zapfen 11 kann durch seitliche, beispielsweise elastische Verlagerung des Führungsarmes 10 aus der Führung 12 verlagert werden, wodurch die Rückenlehne 1 nach hinten in eine etwa horizontale Lage schwenkbar ist. Der Bereich etwa zwischen dem oberen Rand der Rückenlehne 1 und dem unteren Querteil des Heckscheibenrahmens 5 bleibt von der faltbaren Hutablage 9 abgedeckt, die sich entsprechend faltet oder streckt. Der Figur ist nicht ohne weiteres entnehmbar, daß das mit seitlichen C-Säulen 4 verbundene, hintere feste Dachteil zusammen mit den C-Säulen 4 eine Hecköffnung begrenzt, vor die von innen die Heckscheibe 3 um die Querachse 13 des Schwenkrohres 6 schwenkbar ist. Bei in der dargestellten Schließstellung verbleibendem hinteren Dachteil kann die Heckscheibe 3 beispielsweise von einem nicht dargestellten Antrieb um die Querachse 13 in eine Aufbewahrungsstellung über das die Rückenlehne 1 zu einem Fondsitz ergänzende Sitzteil geschwenkt werden. Über den Zapfen 11 und die Führung 12 wird dabei die Rückenlehne nach hinten in eine etwa horizontale Lage geschwenkt. Die Hecköffnung ist dadurch freigelegt, wodurch eine Be- bzw. Entlüftung des Fahrgastraumes erfolgt.

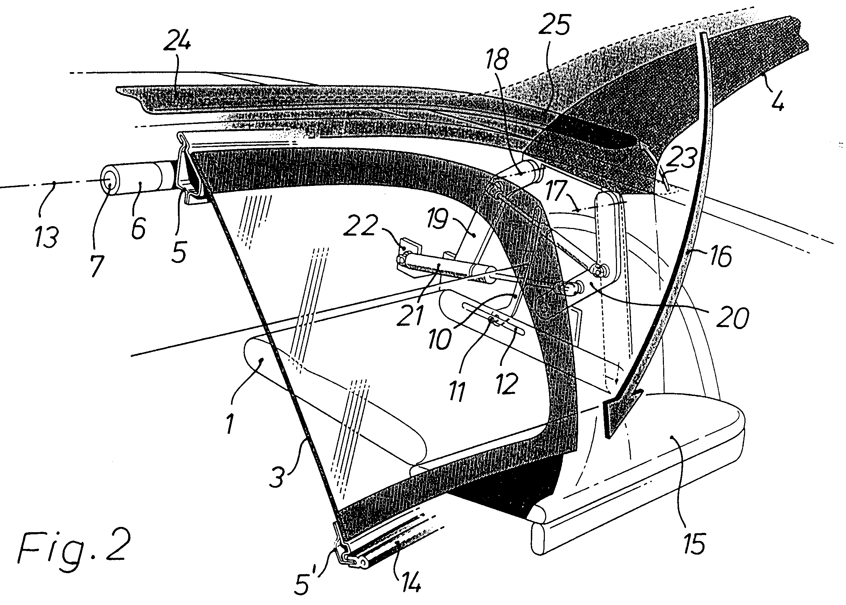

Die gemäß Figur 2 in die Aufbewahrungsstellung abgesenkte Heckscheibe 3 liegt mit ihrem von dem Schwenkrohr 6 abgewandten Rand 5', der eine mit dem Rand der Hecköffnung zusammenwirkende Dichtung 14 aufweist, an dem Sitzteil 15 des Fondsitzes an. Nach dem Absenken der Heckscheibe 3 kann auch das mit den seitlichen C-Säulen 4 verbundene hintere Dachteil in Pfeilrichtung 16 etwa vor und über die Heckscheibe 3 abgesenkt werden. Um eine derartige Schwenkbewegung zu ermöglichen, sind jeweils um eine Querachse 17, 18 schwenkbar in Schließstellung hintereinander an dem unteren Bereich der C-Säulen 4 Schwenkhebel 19, 20 angelenkt, die an ihrem von der betreffenden C-Säule 4 angewandten Ende um karosseriefeste Querachsen schwenkbar sind. Die mit der zugeordneten C-Säule 4 als Koppel ein Viergelenk bildenden Schwenkhebel 19, 20 sind beispielsweise von einem Hydraulikzylinder 21 verstellbar, der einerseits an dem Schwenknebel 20 und andererseits an der Fahrzeugkarosserie 22 abgestützt ist. Beim Einklappen des hinteren Dachteiles und der C-Säulen 4 ist die Verstellbewegung dieser Teile aus einer Schwenkbewegung und einer Translationsbewegung zusammengesetzt. Die beiden Schwenknebel 19, 20 sind jeweils von der karosseriefesten Querachse aus in der dargestellten Schließstellung nach vorne oben und in der Aufbewahrungsstellung nach hinten oben gerichtet. Durch den Pfeil 23 ist angedeutet, daß vor dem Absenken des hinteren Dachteiles und der C-Säulen 4 zuerst eine U-förmige Klappe 24, die seitlich nach vorne gerichtete Schenkel 25 aufweist, etwa um den hinteren Steg nach oben zu schwenken ist, damit sich die Schenkel 25 nicht im Verstellbereich der C-Säulen 4 befinden.

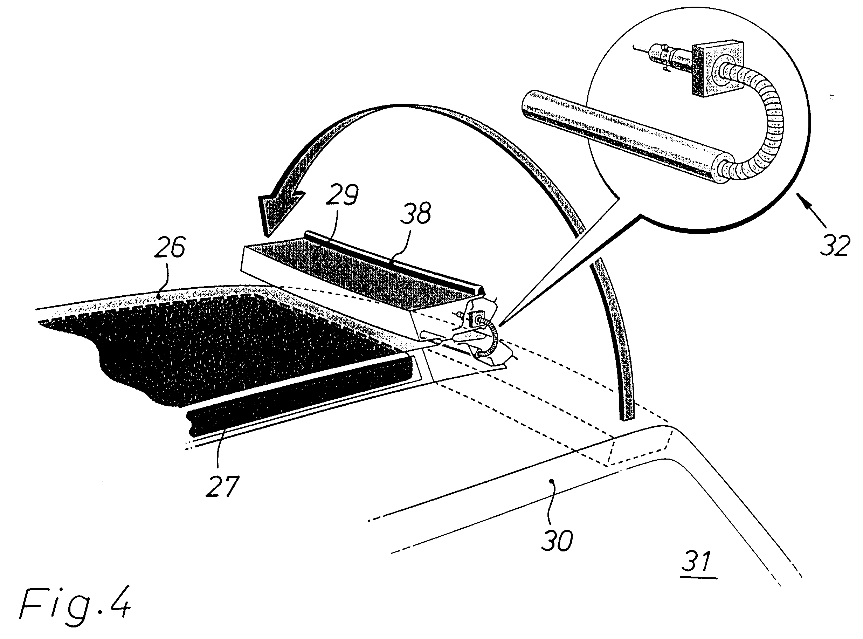

In Figur 4 ist das hintere Dachteil 26 erkennbar, in dem ein vorne offenes Aufnahmefach ausgebildet ist, in das ein als Schiebedach ausgebildetes vorderes Dachteil 27 in Pfeilrichtung 28 einschiebbar ist. Der Figur ist entnehmbar, daß das vordere Dachteil 27 seitlich von je einer Strebe 29 begrenzt ist, die jeweils am vorderen Endbereich am oberen Windlauf 30 der Windschutzscheibe 31 des Kraftfahrzeugs zu verriegeln sind und nach dem Entriegeln über das hintere Dachteil 26 nach hinten schwenkbar sind.

Die seitlichen Streben 29 sind in der Figur in ihrer über das hintere Dachteil 26 geschwenkten Lage dargestellt, in der die in Schließstellung obere Seite der Strebe 29 nach unten gerichtet ist. Das Verschwenken der Streben 29 wird über eine Schubgliederkette 32 bewirkt, die Gegenstand einer anderen Patentanmeldung ist. Über die Schubgliederkette 32 wird an der Strebe 29 im Abstand von einer nicht dargestellten, am hinteren Dachteil ortsfesten oder ideellen Querachse eine Kraft bzw. um die Querachse ein Moment bewirkt, das die Strebe 29 in die dargestellte Ablagestellung oder in die durch unterbrochene Umrißlinien dargestellte Schließstellung schwenkt. An der Strebe 29 ist eine Seitenscheibendichtung 38 und an der in Schließstellung vorderen Stirnseite eine nicht dargestellte Windlaufdichtung vorgesehen.

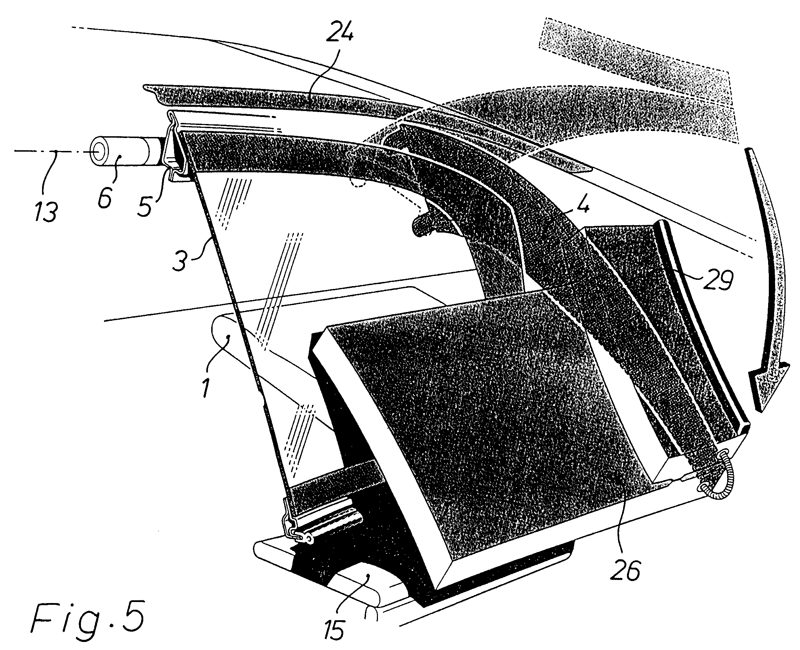

In Figur 5 ist zunächst die Heckscheibe 3 und nachfolgend das hintere Dachteil 26 zusammen mit den Streben 29 und den C-Säulen 4 in die dargestellte Aufbewahrungsstellung eingeschwenkt. Das vordere Dachteil ist in das Aufnahmefach des hinteren Dachteiles 26 vollständig eingeschoben.

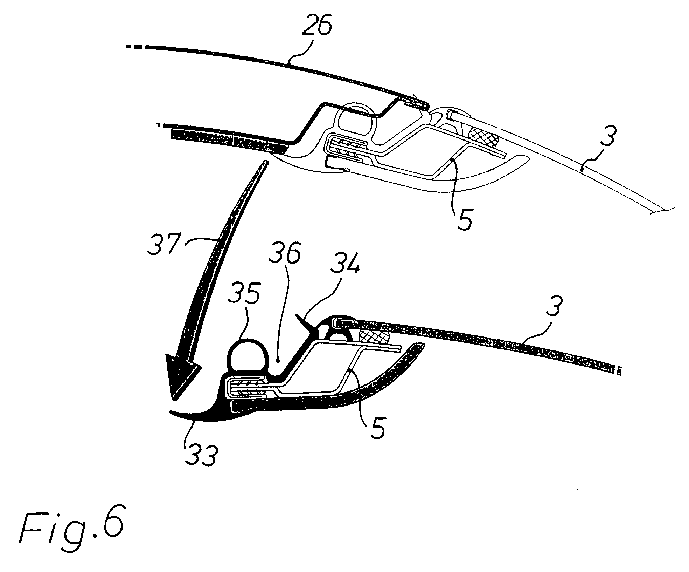

Der vertikale Fahrzeuglängsschnitt gemäß Figur 6 zeigt die Abdichtung der Heckscheibe 3 bzw. des Heckscheibenrahmens 5 gegenüber dem hinteren festen Dachteil 26. Diese besteht aus einer Dreifachdichtung, die zwischen zwei Dichtlippen 33, 34 eine Schlauchdichtung 35 aufweist und zwischen der Schlauchdichtung 35 und der Dichtlippe 34 eine Wasserablaufrinne 36 bildet. Zur Verdeutlichung der dichtenden Teile ist die Heckscheibe 3 in Schließstellung des Fahrzeugdaches und in Pfeilrichtung 37 etwas in Richtung der Aufbewahrungsstellung abgesenkt dargestellt.

Die Erfindung ist auch in einer von dem Ausführungsbeispiel abweichenden Weise ausführbar. Die Schwenkbewegungen der Heckscheibe und des mit C-Säulen verbundenen Dachteiles können um eine ortsfeste oder ideelle Querachse erfolgen, die bei der Schwenkbewegung des Dachteiles bzw. der Heckscheibe durch einen ortsveränderlichen Momentanpol verläuft. Es ist nicht erforderlich, daß die Heckscheibe einen Heckscheibenrahmen aufweist. Bei Verwendung eines Heckscheibenrahmens kann dieser lediglich an einem Umfangsbereich der Heckscheibe vorgesehen sein. Die Hutablage kann entfallen. Bei Verwendung einer Hutablage kann diese auch durch teleskopierbare Teile oder durch ein einziges, beispielsweise dehnbares Teil gebildet sein. Es ist nicht erforderlich, daß das Fahrzeug Fondsitze aufweist. Sind keine Fondsitze vorgesehen, so kann eine hintere Verkleidung von den Führungsarmen verstellbar sein, die beispielsweise in einer zur Rückenlehne des bei dem Ausführungsbeispiel verwendeten Fondsitzes vergleichbaren Weise in eine etwa horizontale Lage schwenkbar ist. Das vordere Dachteil und die seitlichen Streben sind nicht in jedem Fall erforderlich. Sind seitliche Streben vorgesehen, so können diese am freien Ende über eine Querverbindung verbunden sein. An der Querverbindung können ein oder mehrere Verriegelungselemente vorgesehen sein, die in Schließstellung des Fahrzeugdachs eine Verriegelung der Querverbindung an dem oberen Windlauf der Windschutzscheibe ermöglichen. Durch die Querverbindung werden die Streben beim Verstellen parallel verschwenkt. Außerdem ermöglicht die Querverbindung eine einfachere und genauere Schiebedachführung. Die zum Abdichten des geschlossenen Fahrzeugdachs vorgesehenen Dichtungen sind bei Verwendung der Querverbindung wirksamer und ermöglichen einen besseren Wasserablauf. Bei Verwendung eines vorderen Dachteiles kann dieses beispielsweise wie die seitlichen Streben bei dem Ausführungsbeispiel über ein hinteres Dachteil schwenkbar sein. Beim Einschwenken der Heckscheibe bzw. des festen Dachteiles kann die Rückenlehne des Fondsitzes bzw. ein hinteres Verkleidungsteil nach vorne geschwenkt werden.

## Patentansprüche

1. Einklappbares Fahrzeugdach, mit einem festen Dachteil, das über je zwei seitliche Schwenkhebel, die an einem unteren Bereich einer oben mit dem Dachteil verbundenen C-Säule jeweils um eine Querachse schwenkbar angelenkt sind, von einer Schließstellung in eine das Fahrzeugdach öffnende Aufbewahrungsstellung verstellbar ist, sowie mit einer Heckscheibe, dadurch gekennzeichnet, daß die Heckscheibe (3) und das Dachteil (26) unabhängig voneinander in die Aufbewahrungsstellung über ein Sitzteil (15) eines Fondsitzes schwenkbar sind.

2. Einklappbares Fahrzeugdach nach Anspruch 1, dadurch gekennzeichnet, daß in Schließstellung des Dachteiles (26) die Heckscheibe (3) vor den inneren Rand einer zumindest von dem Dachteil (26) und den beiden C-Säulen (4) begrenzten Hecköffnung schwenkbar ist.

3. Einklappbares Fahrzeugdach nach Anspruch 1 oder 2, dadurch gekennzeichnet, daß die Heckscheibe (3) an ihrem in Schließstellung unteren Bereich um eine karosseriefeste Querachse (13) schwenkbar ist und der obere Rand der Heckscheibe (3) in der Aufbewahrungsstellung nach unten geschwenkt ist.

4. Einklappbares Fahrzeugdach nach einem der Ansprüche 1 bis 3, dadurch gekennzeichnet, daß die Heckscheibe (3) mit einem Heckscheibenrahmen (5) versehen ist, der an seinem in Schließstellung unteren Bereich mit zwei seitlich nach vorne gerichteten Führungsarmen (10) verbunden ist, die jeweils mit einem seitlich nach innen gerichteten Zapfen (11) in eine seitliche Führung (12) in einer Fondsitz-Rückenlehne (1) oder in einer hinteren Verkleidung eingreifen.

5. Einklappbares Fahrzeugdach nach Anspruch 4, dadurch gekennzeichnet, daß der Zapfen (11) aus der zugeordneten Führung (12) verlagerbar ist.

6. Einklappbares Fahrzeugdach nach Anspruch 4 oder 5, dadurch gekennzeichnet, daß mit den Führungsarmen (10) ein Teil (8) einer teleskopierbaren oder faltbaren Hutablage (9) verbunden ist, die den Raum zwischen der Heckscheibe (3) und der Rückenlehne (1) bzw. der hinteren Verkleidung überdeckt.

7. Einklappbares Fahrzeugdach nach einem der Ansprüche 1 bis 6, dadurch gekennzeichnet, daß die Schwenkhebel (19, 20) jeweils von ihrer karosserieseitigen Querachse in Schließstellung nach vorne oben und in der Aufbewahrungsstellung nach hinten oben gerichtet sind.

8. Einklappbares Fahrzeugdach nach einem der Ansprüche 1 bis 7, dadurch gekennzeichnet, daß in der Aufbewahrungsstellung das Dachteil (3) oberhalb und/oder vor der zuvor abgesenkten Heckscheibe (3) nach unten geschwenkt ist.

9. Einklappbares Fahrzeugdach nach einem der Ansprüche 1 bis 8, dadurch gekennzeichnet, daß das Dachteil (26) ein hinteres Dachteil mit einem vorne offenen Aufnahmefach ist, in das ein als Schiebedach ausgebildetes vorderes Dachteil (27) zumindest teilweise einschiebbar ist.

10. Einklappbares Fahrzeugdach nach Anspruch 9, dadurch gekennzeichnet, daß das Schiebedach (Dachteil 27) bei geschlossenem Fahrzeugdach von seitlichen Streben (29) begrenzt ist, die jeweils am vorderen Endbereich am oberen Windlauf (30) der Windschutzscheibe (31) des Fahrzeugs zu verriegeln und nach dem Entriegeln über das hintere Dachteil (26) schwenkbar sind.

11. Einklappbares Fahrzeugdach nach Anspruch 10, dadurch gekennzeichnet, daß die Streben (29) mit einer Seitenscheiben- (38) und Windlaufdichtung versehen sind.

## Claims

1. A retractable vehicle roof comprising a fixed part which can be moved from a closed position into a storage position for opening the vehicle roof by means of two pairs of pivoted levers at the sides, the levers being pivotable around a transverse axis on a lower region of a respective C-column connected at the top to the roof part, the roof also comprising a rear window, characterised in that the rear window (3) and the roof part (26) are independently pivotable into the storage position over a surface (15) of a back seat.

2. A retractable vehicle roof according to claim 1, characterised in that when the roof part (26) is in the closed position, the rear window (3) can be swung in front of the inner edge of a rear opening bounded at least by the roof part (26) and by the two C-columns (4).

3. A retractable vehicle roof according to claim 1 or claim 2, characterised in that the bottom region of the rear window (3), when in the closed position, can be swung around a transverse pivot (13) secured to the body and the top edge of the rear window (3) is swung downwards into the storage position.

4. A retractable vehicle roof according to any of claims 1 to 3, characterised in that the rear window (3) has a frame (5) and the lower region of the frame, when in the closed position, is connected to two lateral forward-extending guide arms (10), each having a lateral inwardly-directed lug (11) which engages in a lateral guide (12) in a back seat rest (1) or in a rear cover.

5. A retractable vehicle roof according to claim 4, characterised in that the lug (11) can be moved out of the associated guide (12).

6. A retractable vehicle roof according to claim 4 or claim 5, characterised in that the guide arms (10) are connected to a part (8) of a telescopic or foldable hat rack (9) which covers the space between the rear window (3) and the back rest (1) or the rear covering.

7. A retractable vehicle roof according to any of claims 1 to 6, characterised in that the pivoted levers (19, 20) each extend upwards and forwards from their transverse pivot on the body, when in the closed position, and extend upwards and backwards when in the storage position.

8. A retractable vehicle roof according to any of claims 1 to 7, characterised in that in the storage position, the roof part (3) is swung downwards above and/or in front of the previously-lowered rear window (3).

9. A retractable vehicle roof according to any of claims 1 to 8, characterised in that the roof part (26) is a rear roof part with a compartment open at the front, into which a front roof part (26) in the form of a sliding roof can be at least partly inserted.

10. A retractable vehicle roof according to claim 9, characterised in that when the roof is closed, the sliding roof (roof part 27) is bounded by lateral struts (29), the front end regions of which can each be locked to the apron (30) at the top of the windscreen (31) and, after being unlocked, can be swung over the rear roof part (26).

11. A retractable vehicle roof according to claim 10, characterised in that the struts (29) have a seal over the side windows (38) and the apron.

## Revendications

1. Toit pliant escamotable pour véhicule automobile, comprenant une partie de toit rigide qui peut être déplacée d'une position de fermeture à une position de remisage ouvrant le toit du véhicule, par l'intermédiaire de deux leviers situés de chaque côté et pouvant basculer chacun au niveau de la partie inférieure d'un pied-droit C relié en haut à la partie de toit, ainsi qu'une vitre arrière,
caractérisé en ce que
la vitre arrière (3) et la partie de toit (26) peuvent être amenées par basculement indépendamment l'une de l'autre dans une position de remisage au-dessus de l'assise (15) d'un siège arrière.

2. Toit pliant escamotable selon la revendication 1,
caractérisé en ce qu'
en position de fermeture de la partie de toit (26), la vitre arrière (3) peut être amenée par basculement devant le bord interne d'une ouverture arrière délimitée par la partie de toit (26) et les deux pieds-droits (C4).

3. Toit pliant escamotable selon la revendication 1 ou 2,
caractérisé en ce que
la vitre arrière (3), le long de sa partie inférieure en position de fermeture, peut basculer autour d'un axe transversal (13) fixe par rapport à la carrosserie, tandis que le bord supérieur de la vitre (3) est basculé vers le bas en position de remisage.

4. Toit pliant escamotable selon une des revendications 1 à 3,
caractérisé en ce que
la vitre arrière (3) est entourée d'un cadre (5) qui, à sa partie inférieure en position de fermeture, est relié à deux bras de guidage (10) dirigés vers l'avant et en prise chacun par un pivot latéral (11) dirigé vers l'intérieur, dans un guidage latéral (12) logé dans le dossier (1) du siège arrière ou d'un garnissage arrière.

5. Toit pliant escamotable selon la revendication 4,
caractérisé en ce que
le pivot (11) peut être dégagé du guidage (12) qui lui est associé.

6. Toit pliant escamotable selon la revendication 4 ou 5,
caractérisé en ce qu'
aux bras de guidage (10) est reliée une partie d'une plage arrière (9), télescopique ou pliable, qui recouvre l'espace existant entre la vitre arrière (3) et le dossier (1) ou le garnissage arrière.

7. Toit pliant escamotable selon une des revendications 1 à 6,
caractérisé en ce que
les leviers basculants (19, 20) sont dirigés chacun, en partant de leur axe transversal situé vers la carrosserie, vers l'avant et le haut en position de fermeture, vers l'arrière et le haut en position de remisage.

8. Toit pliant escamotable selon une des revendications 1 à 7,
caractérisé en ce qu'
en position de remisage, la partie de toit (7) est basculée au-dessus et/ou en avant de la vitre arrière (3) préalablement rabattue vers le bas.

9. Toit pliant escamotable selon une des revendications 1 à 8,
caractérisé en ce que
la partie de toit (26) est une partie arrière de toit présentant un réceptacle ouvert à l'avant et dans lequel une partie de toit (27) ayant la forme d'un toit coulissant peut être engagée au moins partiellement.

10. Toit pliant escamotable selon la revendication 9,
caractérisé en ce que
le toit coulissant (partie de toit (27)), lorsque le toit est fermé, est délimité latéralement par des barres (29), dont chacune est verrouillable le long de son extrémité avant sur l'auvent (30) bordant en haut le pare-brise (31) du véhicule, chaque barre pouvant, après déverrouillage, être rabattue par basculement sur la partie arrière de toit (26).

11. Toit pliant escamotable selon la revendication 10,
caractérisé en ce que
les barres (29) sont équipées chacune d'un joint d'étanchéité de vitre (38) et d'un joint d'étanchéité de pare-brise.
